# EUROPEAN PATENT SPECIFICATION

(11) **EP 1 114 358 B1**
(45) Date of publication and mention of the grant of the patent: **12.05.2004**
(21) Application number: 99951331.0
(22) Date of filing: 17.09.1999
(51) Int. Cl.: G05B 11/14, G05B 11/26, F16K 29/00

(54) **A CONTROL DEVICE FOR ADJUSTING AN ACTUATOR**
STEUERUNGSVORRICHTUNG ZUR EINSTELLUNG EINES BETÄTIGERS
DISPOSITIF DE COMMANDE SERVANT A REGLER UN ORGANE DE COMMANDE

(30) Priority: 18.09.1998 SE 9803173
(43) Date of publication of application: 11.07.2001
(73) Proprietor: Process Inovation AB, 45052 Dingle (SE)
(72) Inventor: Buhr, Staffan, 450 52 Dingle (SE)
(74) Representative: Westman, Per Börje Ingemar
(86) International application number: PCT/SE1999/001625
(87) International publication number: WO 2000/017717

(56) References cited:
- CH-A5- 600 219
- SE-C2- 504 601
- SU-A- 1 270 476
- US-A- 3 562 620
- US-A- 4 394 999
- US-A- 4 430 846
- US-A- 5 654 885

## Description

The invention refers to a control device for adjusting an actuator, for control of a process, such as a valve adjustment in a process supply tube, which device comprises means for monitoring of the actual value of the actuator, and means for correction of this to a desired value.

Control devices of the above mentioned type, in which a measured actual value is compared with a desired value and which comprises means of correction, are previously known.

In an control device present in the market the comparison is made between actual and desired values by means of a mechanical equilibrium of forces, wherein actual and desired values are equal when the system is in balance.

These systems with mechanical equilibrium of forces have several disadvantages. The mechanical parts comprised in the systems are exposed to wear and specially in warm and humid climates corrosion is a serious problem. Therefore, mechanical equilibrium of forces systems require much maintenance to be able to operate satisfactory.

The accuracy in said known systems is of the order of 0.5 %, which in many applications is not satisfactory. This accuracy can also vary depending on climate and temperature, If the control device is used in extremely warm environments or is exposed to intense sunlight, the material expansion can cause problems.

US patent 5,634,885 describes a control device for a process flow valve. The control device comprises a sensor, which registers the actual value of the valve and delivers an analog electric signal corresponding to the actual position of the process flow valve to a comparator. Here the signal corresponding to the actual value is compared with an-electric desired signal from a control unit. The comparator transmits control signals corresponding to the difference between the actual and desired values for adjusting the solenoid valves, which in turn control the flow to an control device for adjusting the process flow valve.

In the control device according to the US patent 5,654,885 the number of movable mechanical parts has been reduced compared to the above mentioned control device with mechanical balance control. However, the control device according to US 5,654,885 has some major shortcomings. The solenoid valves of the device can jam and even get stuck, which cause the control device to be non-operational. The control signals outputed to the solenoid valves do not provide the intended effect. A control device according to US 5,654,884 therefore requires much maintenance for satisfactory functioning.

Relevant prior art is also disclosed in document US 4,394,999.

With the present invention, an improved control device is achieved which requires less maintenance.

The control device according to the invention is defined by claim 1.

Because the said pulse sequence is able to rap valves which seize or have jamed less maintenance is required.

According to a particularly suitable embodiment, the invention is characterized in that the control valve is provided with hand operating devices, with which the included valves can be controlled manually and entirely mechanically for adjusting the actuator to a desired position.

Thanks to this construction the control device can be emergency operated entirely manually during a power failure. This is not possible with previous known control devices.

Hand operating devices also enable emergency operating during signal interruption, which allows the control device to be controlled manually during replacement or reparation of electrical components.

A considerable advantage with hand operating devices for regulating of the control device is that an equipment during startup can be test run even before the control electronics are switched on. Shutdown in connection with fault detection, maintenance or reparation can often be avoided when there is a possibility of controlling a process with hand operating devices.

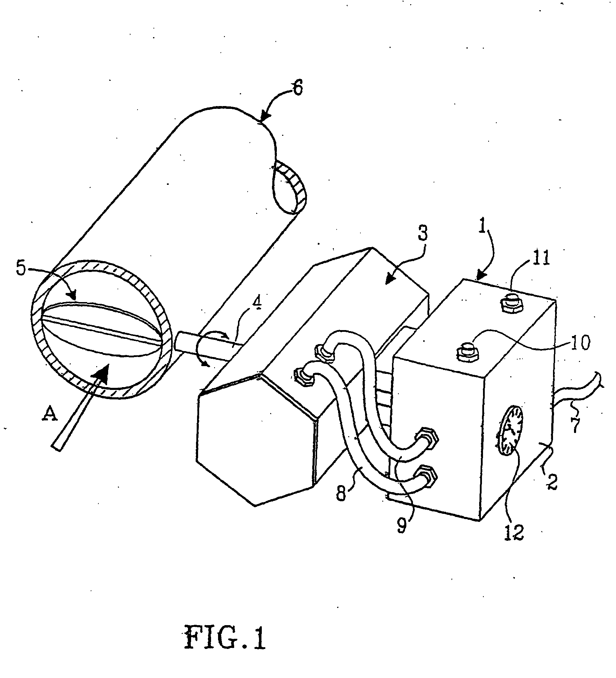

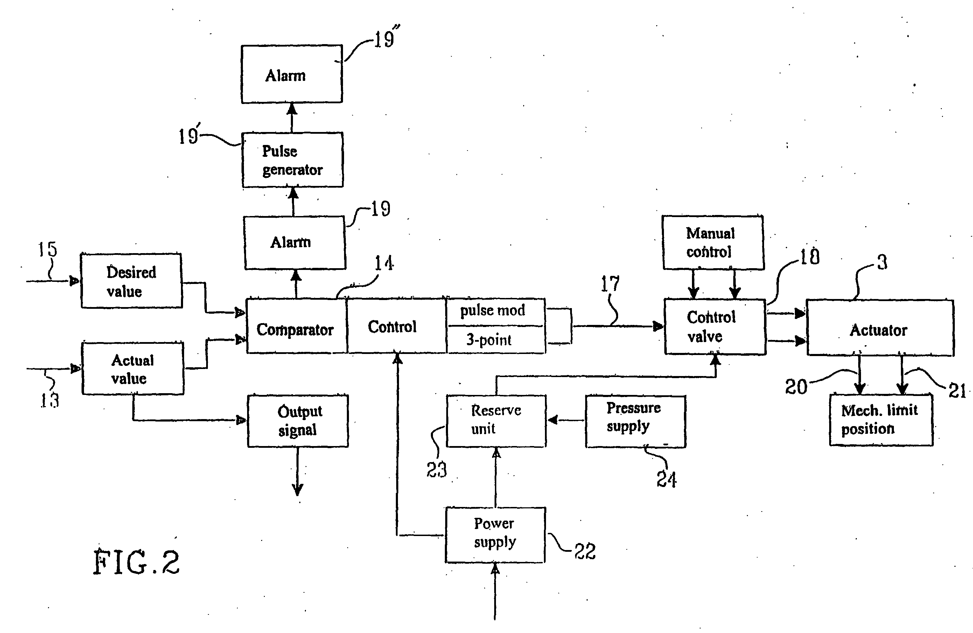

In the following the invention will be described more detailed with reference to embodiments, which are shown in the accompanying drawings, wherein Fig. 1 schematically shows a control device according to the invention for adjusting an actuator, which controls a flow valve. Fig. 2 shows a block diagram, which schematically illustrates the parts of the device according to the invention.

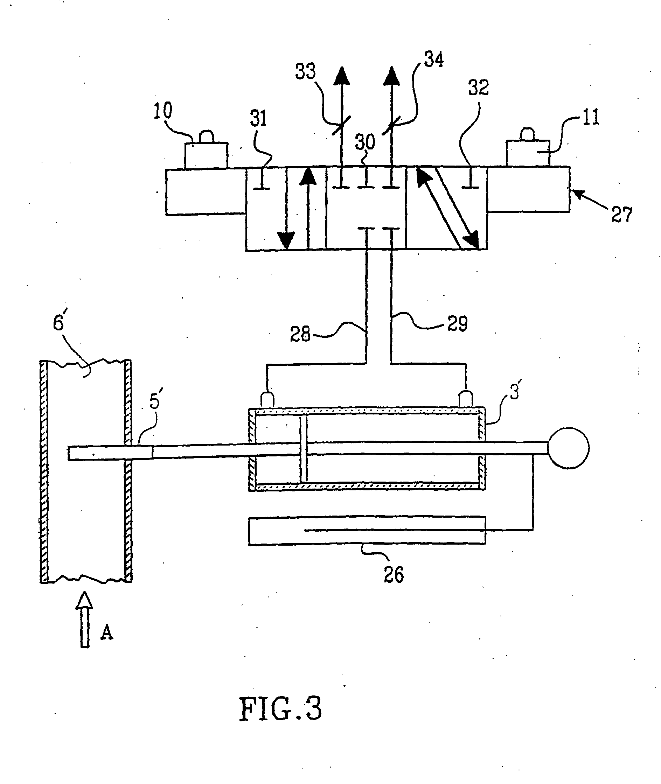

Fig. 3 shows an embodiment of some pieces of the block diagram in Fig. 2.

The control unit 1 has a casing 2, inside which is provided with a control valve, comprising a solenoid valve, and a circuit board with electrical components for controlling the device by input control signals according to the invention. The casing 1 is arranged on an actuator 3, which regulates the rotation of a shaft 4 for transmission of power, which is non-rotatably attached to a plate valve 5, which in turn regulates the flow A in a process supply tube 6. The adjustment of the actuator is controlled by a driving medium, which in the shown embodiment is compressed air. This is fed from a compressed source via a line 7 to the control unit 1, where the solenoid valve controls the flow of compressed air to and from the actuator. The lines with compressed air from the control unit 1 to the actuator has in Fig. 1 been indicated by reference numbers 8 and 9.

The control unit 1 is supplied with power and the solenoid valve is controlled through control signals from an operating centre. Thus, the adjustment of the actuator is normally remote controlled.

The device according to the invention is also provided with an emergency control system, with which the actuator can be controlled manually och entirely mechanically during an interruption of power supply and/or control signals.

The emergency control system is ideally simpel. On the outside of the casing 1 is provided push buttons 10, 11, by means of which the solenoid valve can be directly controlled mechanically for regulating compressed air to the actuator. The control unit 1 is also provided with a position indicator 12, whose pointers are mechanically connected directly to the shaft 4 for transmission of power so that the position indicator always shows the position of the valve 5 and the amount of the process flow A. With help of the push buttons 10, 11 and the position indicator the actuator can easily be emergency controlled manually during voltage or signals failure.

The control device normally works as schematically shown in Fig. 2.

A potentiometer detects the actual value 13 of the actuator, which is transmitted to a comparator 14 in the control unit 1 and in the form of an out-put signal for remote reading of the actual value. A desired value 15 is fed to the comparator. When there is a difference between the actual value and the desired value the control signals 17 are transmitted to the control valve 3. It is provided with a solenoid valve, which is further described in connection with Fig. 3. The solenoid valve is controlled either by pulse modulation or three-point control. Pulse modulation gives a better accuracy in regulating the solenoid valve for adjusting the actuator.

When the actuator is heavely loaded and when the flow is slow the three-point-control is suitable.

The control device comprises a first alarm 19. It is time controlled and activated after a certain time if a registered difference between the actual value and desired value has not been connected. The alarm effects a pulse generating circuit 19' which generates a pulse sequence to the solenoid valve to rap valves that have got stuck. If the registered difference between the actual value and desired value has not been corrected after a certain time after the generation of said pulse sequence a second alarm 19" is activated.

If the desired value can not be reached with the control unit, an operator can operate the control valve manually for regulating the actuator until the fault has been located and fixed. As mentioned in connection with Fig. 1, the actual value of the actuator can always be read on a position indicator 12 on the control unit 1, which enables for entirely manually control of the solenoid valve for adjusting the actuator during the interruption of operating power and control signals. For increased safety, the actuator has two mechanical limit switches 20, 21, one which for example can indicate totally closed valve 5 in the process flow tube and the other for example totally open valve. The limit switches 20, 21 are continously adjustable for arbitrary choice of desired limit positions. With help of the limit switches a clear indication is given that the actuator is in a chosen limit position.

If the operating voltage and consequently the power supply 22 is interrupted a reserve unit 23 is connected comprising a battery, which gives a pulse to the solenoid valve for adjusting the actuator to a desired predetermined position, for example totally opened or closed.

Even during the interruption of signals or air, the reserve unit 23 controls the actuator to said predetermined position. The pressure supply 24 of the driving medium for the actuator, which in the shown embodiment consists of compressed air, is obtained by means of a not shown compressor.

Fig. 3 shows a modified embodiment of the actuator 3' and a valve 5' controlled by it, in a process flow tube 6'.

The actuator 3' consists of a cylinder and a piston 25 provided in it which is partly in connection partly with the valve 5' for its control and partly with a position indicator 26, which shows the actual value of the piston 25 and consequently of the valve 5'. The position indicator 26 suitably consists of a potentiometer which continuosly delivers an analoge actual value signal to the control unit 1. The solenoid valve, which as a whole is referenced by 27, controls the flow of compressed air for regulating the piston 25 in the actuator 3'. The solenoid valve has three different adjustment positions. In one position, compressed air is fed via the line 28 to the cylinder space to the left of the piston, at which the piston is displaced to the right and moves the valve 5' in the opening direction.

In a second adjustment position of the solenoid valve the compressed air is fed in opposite direction to the cylinder, i e the compressed air is fed via the line 29 to the cylinder space to the right of the piston 25, at which it is displaced to the left and brings the valve 5' in the closing direction. In Fig. 3 the supply channel is denoted by 30 and the air outlet-channels 31 and 32.

Fig. 3 shows the solenoid valve in its third position, the-centre position. In this position the solenoid valve is closed and no compressed air can be fed to or from the cylinder space, but the piston remains in the adjusted position. Thanks to this design, compressed air is only consumed when the actuator is displaced for changing the adjustment of the valve 5'.

As mentioned above the solenoid valve due to the pulse modulation can oscillate between its adjustment positions depending on the applied pulse frequency.

Even three-point control can sometimes be suitable.

The speed of the actuator can easily be regulated by means of throttle valves 33, 34 in the air outlet channels 31 and 32.

Fig. 3 also shows the push buttons 10 and 11. During an interruption of operating voltage or control signals the solenoid valves can be controlled manually and entirely mechanically by means of the push buttons 10,11. The solenoid valve is of the type five channels three ways valve with closed centre position. A solenoid valve of this type is displaced between its adjustment positions by compressed air, which flow direction for adjusting the valve is controlled by means of solenoid regulated seat valves. These seat valves can also be regulated manually with said push buttons 10, 11.

By pressing the push button 10 loaded by a spring provided in the push button the solenoid valve is placed in its first position, where feeding of compressed air is done via the line 28. When the push button is released the solenoid valve returns to its closed centre position by the effect of a not shown spring comprised in the solenoid valve. In a corresponding way, the inlet via the line 29 is controlled by the push button 11.

The invention is not limited to the above described embodiments, but several modifications are possible within the scope of the succeeding claims.

The control device according to the invention is of course not limited to the above described actuator. This can be of arbitrary type, such as singel or dubble acting actuators with gas or liquid as driving medium. In Fig. 3 a double acting actuator of cylinder type has been shown. The actuator according to Fig. 3 can be substituted by a single acting actuator of cylinder type with spring effect. In connection with Fig. 1 an actuator in the form of a rotating device has been described. Alternatively, the actuator can be of membrane type.

## Claims

1. Control device for adjusting an actuator (3), for controlling a grocess, such as a valve adjustment in a process supply tube (6), which device comprises means for monitoring the actual value of the actuator, and means for correction of this to a desired value,
***characterized in,***
**that** a control valve (18) is arranged to control the flow of driving medium, such as liquid or gas, for adjusting the actuator (3),
**that** an electric control circuit is arranged for regulating the control valve, when the actual value differs from the desired value, wherein means for monitoring the actual value is connected to the control circuit,
**that** the control valve (18) comprises a solenoid valve (27), which is regulated by pulse modulation or three-point control, that to the control circuit is connected a first alarm (19), which is intended to be activated if the difference from the desired value is not corrected within a certain time,
**that** the control unit after activation of said first alarm is arranged to start a pulse sequence intended to effect the control valve for the purpose of releasing potentially locked valves,
and **that** the device comprises a reserve unit comprising a battery (23), which during interruption of operation voltage, driving fluids or control signals delivers a pulse to the control valve (18) for adjusting the actuator (3) to a predetermined position, opened or closed.

2. Control device according to claim 1,
***characterized in,***
**that** the control valve (18) is arranged with hand operating devices (10, 11) comprising valves which can be operated manually and entirely mechanically for adjusting the actuator (3) to desired position.

3. Control device according to claim 2,
***characterized in,***
**that** the hand operating devices (10, 11) are push buttons, which through a spring load are pressable for opening of respective valve.

4. Control device according to any of the preceding claims,
***characterized in,***
**that** the device is arranged with means for remote reading for monitoring the operating condition of the device.

5. Control device according to any of the preceding claims,
***characterized in,***
**that** an indicator (12; 26) is mechanically connected to the actuator (3:3') to indicate its current value.

6. Control device according to any of the preceding claims,
***characterized in,***
**that** two mechanical limit switches (20, 21) are arranged in the device, which indicate when the determined limits are reached and which are eventually intended to brake the flow of driving medium when the actuator has reached the determined limits.

7. Control device according to any of the preceding claims,
***characterized in,***
**that** a second alarm (19") is arranged in the control circuit, to be activated if the desired value is not reached after a certain time after the output of said pulse sequence intended to release eventually locked valves.

8. Control device according to any of the preceding claims, for adjusting an actuator (3), for controlling a process, such as a valve adjustment in a process supply tube (6), which device comprises means for monitoring the actual value of the actuator, and means for correction of this to a desired value,
***characterized in,***
**that** a hand operating device (10, 11) is provided, which is designed to entirely mechanically control normally automatic controlled control valves (18) during interruption of electric control signals and/or operating voltage, which valves are intended for flow regulation of a driving medium, such as liquid or gas, for adjusting an actuator (3), which in turn controls a process, such as valve adjustment in said process supply tube (6).

## Patentansprüche

1. Steuervorrichtung zur Einstellung eines Aktuators (3) zur Steuerung eines Prozesses, beispielsweise einer Ventileinstellung in einem Prozesszulaufrohr (6), wobei die Vorrichtung eine Einrichtung zur Anzeige des tatsächlichen Wertes des Aktuators und eine Einrichtung zur Korrektur dieses Wertes auf einen gewünschten Wert umfasst,
**dadurch gekennzeichnet,**
**dass** ein Steuerventil (18) dazu ausgebildet ist, den Fluss des Antriebsmediums, beispielsweise einer Flüssigkeit oder eines Gases, für die Einstellung des Aktuators (3) zu steuern,
**dass** ein elektrischer Steuerstromkreis dazu ausgebildet ist, das Steuerventil zu regulieren, wenn der tatsächliche Wert vom gewünschten Wert abweicht, wobei eine Einrichtung zur Anzeige des tatsächlichen Wertes an den Steuerstromkreis angeschlossen ist,
**dass** das Steuerventil (18) ein Magnetventil (27) umfasst, das durch Impulsmodulation oder Drei-Punkt-Steuerung reguliert ist,
**dass** an den Steuerstromkreis ein erster Alarm (19) angeschlossen ist, dessen Aktivierung vorgesehen ist, wenn die Abweichung vom gewünschten Wert nicht innerhalb einer vorgegebenen Zeit korrigiert ist, dass die Steuereinheit nach Aktivierung des ersten Alarms dazu ausgebildet ist, eine Impulssequenz zu starten, die dazu bestimmt ist, auf das Steuerventil dahingehend einzuwirken, dass möglicherweise festsitzende oder geschlossene Ventile gelöst werden, und
**dass** die Vorrichtung eine Reserveeinheit umfasst, die eine Batterie (23) umfasst, wobei die Reserveeinheit während einer Unterbrechung von Betriebsspannung, Antriebsfluiden oder Steuersignalen einen Impuls an das Steuerventil (18) ausgibt zur Einstellung des Aktuators (3) auf eine vorgegebene Position, offen oder geschlossenen.

2. Steuervorrichtung nach Anspruch 1,
**dadurch gekennzeichnet,**
**dass** das Steuerventil (18) mit einer Handbetriebseinrichtung (10, 11) versehen ist, die Ventile umfasst, die zur Einstellung des Aktuators (3) auf die gewünschte Position manuell und vollkommen mechanisch bedienbar sind.

3. Steuervorrichtung nach Anspruch 2,
**dadurch gekennzeichnet,**
**dass** die Handbetriebseinrichtung (10, 11) Drucktasten umfasst, die gegen eine Federkraft drückbar sind zum Öffnen des jeweiligen Ventils.

4. Steuervorrichtung nach einem der vorhergehenden Ansprüche,
**dadurch gekennzeichnet,**
**dass** die Vorrichtung mit einer Einrichtung zum Fernablesen versehen ist, um den Betriebszustand der Vorrichtung anzuzeigen.

5. Steuervorrichtung nach einem der vorhergehenden Ansprüche,
**dadurch gekennzeichnet,**
**dass** eine Anzeigeeinrichtung (12; 26) mechanisch mit dem Aktuator (3; 3') verbunden ist, um seinen aktuellen Wert anzuzeigen.

6. Steuervorrichtung nach einem der vorhergehenden Ansprüche,
**dadurch gekennzeichnet,**
**dass** zwei mechanische Grenzwertschalter (20, 21) in der Vorrichtung vorgesehen sind, die anzeigen, wenn die vorgegebenen Grenzwerte erreicht werden und die letztendlich dazu bestimmt sind, den Fluss des Antriebsmediums zu stoppen oder zu reduzieren, wenn der Aktuator die vorgegebenen Grenzwerte erreicht hat.

7. Steuervorrichtung nach einem der vorhergehenden Ansprüche,
**dadurch gekennzeichnet,**
**dass** ein zweiter Alarm (19") in dem Steuerstromkreis vorgesehen ist, der aktiviert wird, wenn der gewünschte Wert nach einer vorbestimmten Zeit nach Ausgabe der Impulssequenz, die dazu bestimmt ist, möglicherweise festsitzende oder geschlossene Ventile zu lösen, nicht erreicht wird.

8. Steuervorrichtung nach einem der vorhergehenden Ansprüche, zur Einstellung eines Aktuators (3) zur Steuerung eines Prozesses, beispielsweise einer Ventileinstellung in einem Prozesszulaufrohr (6), wobei die Vorrichtung eine Einrichtung zur Anzeige des tatsächlichen Wertes des Aktuators und eine Einrichtung zur Korrektur dieses Wertes auf einen gewünschten Wert umfasst,
**dadurch gekennzeichnet,**
**dass** eine Handbetriebseinrichtung (10, 11) vorgesehen ist, die dazu ausgebildet ist, normalerweise automatisch gesteuerte Steuerventile (18) während einer Unterbrechung von elektrischen Steuersignalen und/oder Betriebsspannung vollkommen mechanisch zu steuern, wobei die Ventile für die Flussregulierung eines Antriebsmediums, beispielsweise einer Flüssigkeit oder eines Gases, für die Einstellung des Aktuators (3) vorgesehen sind, der wiederum einen Prozess steuert, beispielsweise die Ventileinstellung in dem Prozesszulaufrohr (6).

## Revendications

1. Dispositif de commande destiné à régler un actionneur (3), afin de commander un processus, tel qu'un réglage de vanne dans un tube d'alimentation de processus (6), lequel dispositif comprend un moyen destiné à surveiller la valeur réelle de l'actionneur, et un moyen pour corriger celle-ci à une valeur souhaitée,
***caractérisé***
**en ce qu'**une vanne de commande (18) est agencée pour commander la circulation d'un milieu d'entraînement, tel qu'un liquide ou un gaz, afin de régler l'actionneur (3),
**en ce qu'**un circuit de commande électrique est agencé pour réguler la vanne de commande, lorsque la valeur réelle diffère de la valeur souhaitée, où le moyen destiné à surveiller la valeur réelle est relié au circuit de commande,
**en ce que** la vanne de commande (18) comprend une électrovanne (27) qui est régulée par une modulation d'impulsions ou une commande en trois points, en ce qu'une première alarme (19) est reliée au circuit de commande, laquelle est destinée à être activée si la différence par rapport à la valeur souhaitée n'est pas corrigée dans un certain laps de temps,
**en ce que** l'unité de commande après l'activation de ladite première alarme est agencée pour démarrer une suite ou un train d'impulsions destiné(e) à agir sur la vanne de commande dans le but de déclencher des vannes potentiellement verrouillées, et en ce que le dispositif comprend une unité de réserve comprenant une batterie (23) qui, pendant l'interruption de la tension de fonctionnement, des fluides d'entraînement ou des signaux de commande, délivre une impulsion à la vanne de commande (18) afin de régler l'actionneur (3) à une position prédéterminée, ouverte ou fermée.

2. Circuit de commande selon la revendication 1,
***caractérisé***
**en ce que** la vanne de commande (18) est agencée grâce à des dispositifs fonctionnant manuellement (10, 11) comprenant des vannes qui peuvent être mises en oeuvre manuellement et entièrement mécaniquement afin de régler l'actionneur (3) à la position désirée.

3. Dispositif de commande selon la revendication 2,
***caractérisé***
**en ce que** les dispositifs fonctionnant manuellement (10, 11) sont des boutons poussoirs qui peuvent être pressés grâce à une charge de ressort pour l'ouverture d'une vanne respective.

4. Dispositif de commande selon l'une quelconque des revendications précédentes,
***caractérisé***
**en ce que** le dispositif est agencé avec un moyen de lecture à distance pour surveiller la condition de fonctionnement du dispositif.

5. Dispositif de commande selon l'une quelconque des revendications précédentes,
***caractérisé***
**en ce qu'**un indicateur (12 ; 26) est relié mécaniquement à l'actionneur (3 ; 3') pour indiquer sa valeur actuelle.

6. Dispositif de commande selon l'une quelconque des revendications précédentes,
***caractérisé***
**en ce que** deux commutateurs de limite mécanique (20, 21) sont agencés dans le dispositif, lesquels indiquent lorsque les limites déterminées sont atteintes et lesquels sont finalement destinés à freiner la circulation du milieu d'entraînement lorsque l'actionneur a atteint les limites déterminées.

7. Dispositif de commande selon l'une quelconque des revendications précédentes,
***caractérisé***
**en ce qu'**une seconde alarme (19") est agencée dans le circuit de commande afin d'être activée si la valeur désirée n'est pas atteinte après un certain temps après l'émission de ladite suite d'impulsions destinée à déclencher des vannes finalement verrouillées.

8. Dispositif de commande selon l'une quelconque des revendications précédentes, destiné à régler un actionneur (3), afin de commander un processus tel que le réglage d'une vanne dans un tube d'alimentation de processus (6), lequel dispositif comprend un moyen destiné à surveiller la valeur réelle de l'actionneur et un moyen de correction de celle-ci à une valeur désirée,
***caractérisé***
**en ce qu'**un dispositif fonctionnant manuellement (10, 11) est fourni, lequel est conçu pour commander entièrement mécaniquement des vannes de commande normalement commandées automatiquement (18) pendant une interruption des signaux de commande électrique et/ou d'une tension de fonctionnement, lesquelles vannes sont destinées à la régulation de circulation d'un milieu d'entraînement, tel qu'un liquide ou un gaz, afin de régler un actionneur (3), qui commande à son tour un processus tel que le réglage d'une vanne dans ledit tube d'alimentation du processus (6).
